# EUROPEAN PATENT SPECIFICATION

(11) **EP 4 199 226 B1**
(45) Date of publication and mention of the grant of the patent: **02.12.2026**
(21) Application number: 22820553.0
(22) Date of filing: 08.06.2022
(51) Int. Cl.: H01M 50/358, H01M 50/383, H01M 50/375, H01M 50/249, H01M 50/291, H01M 50/204

(54) **BATTERY MODULE, AND BATTERY PACK AND VEHICLE INCLUDING THE SAME**
BATTERIEMODUL SOWIE BATTERIE UND FAHRZEUG DAMIT
MODULE DE BATTERIE, AINSI QUE BATTERIE ET VÉHICULE COMPRENANT CELUI-CI

(30) Priority: 08.06.2021 KR 20210074433
(43) Date of publication of application: 21.06.2023
(73) Proprietor: LG Energy Solution, Ltd., Seoul 07335 (KR)
(72) Inventor: SHIN, Ju-Hwan, Daejeon 34122 (KR); KIM, Dong-Hyun, Daejeon 34122 (KR); KIM, Tae-Geun, Daejeon 34122 (KR); CHOI, Jong-Hwa, Daejeon 34122 (KR); LEE, Hyoung-Suk, Daejeon 34122 (KR)
(74) Representative: Goddar, Heinz J.
(86) International application number: PCT/KR2022/008073
(87) International publication number: WO 2022/260425

(56) References cited:
- EP-A1- 4 181 301
- WO-A1-2012/133710
- WO-A1-2020/134070
- CN-Y- 2 884 545
- JP-B2- 5 582 246
- JP-B2- 6 255 151
- KR-A- 20110 042 119
- KR-A- 20120 038 212
- KR-A- 20170 090 261
- US-A1- 2023 299 415

## Description

### TECHNICAL FIELD

The present disclosure relates to a battery module, and a battery pack and vehicle including the same, and more particularly, to a battery module in which safety against fire or gas explosion is increased, and a battery pack and vehicle including the same.

The present application claims priority to Korean Patent Application No. 10-2021-0074433 filed on June 8, 2021 in the Republic of Korea.

### BACKGROUND ART

As the demand for portable electronic products such as laptops, video cameras, and mobile phones has recently rapidly increased and the development of electric vehicles, energy storage batteries, robots, satellites, etc. has begun in earnest, research on high-performance secondary batteries capable of repeated charge/discharge has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus have advantages of free charge/discharge, very low self-discharge rate, and high energy density.

A lithium secondary battery mainly uses a lithium-based oxide and a carbon material as a positive electrode active material and a negative electrode active material, respectively. Also, the lithium secondary battery includes an electrode assembly in which a positive electrode plate and a negative electrode plate to which the positive electrode active material and the negative electrode active material are respectively applied are located with a separator therebetween, and a casing, that is, a battery case, for sealing and accommodating the electrode assembly along with an electrolyte.

According to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

In particular, the demand for large-capacity battery packs applied to electric vehicles and the like has recently increased. A large-capacity battery pack includes a plurality of battery modules including battery cells. In a large-capacity battery pack mounted in a vehicle, gas explosion may occur in some battery modules during electrical charging/discharging of a plurality of battery modules. In this case, in the prior art, it is difficult to predict a directivity of gas discharged from the battery modules and to control the gas to be discharged to a set position. Accordingly, high-temperature gas, flames, or sparks discharged outward from the battery modules moves to other adjacent battery modules, thereby causing thermal runaway or secondary gas explosion of the other battery modules. Accordingly, there is a problem in that the scale and risk of an accident such as gas explosion occurring in an initial stage leading to chain explosion is further increased.

Accordingly, there is a demand for a method of, even when gas explosion occurs in some of multiple battery modules, minimizing the movement of the gas to other adjacent battery modules.

Also, a large-capacity battery module has a problem in that because a plurality of battery cells are accommodated in the large-capacity battery module, when gas explosion or thermal runaway occurs in some battery cells, high-temperature gas, sparks (particles), and flames are transmitted to other battery cells in the large-capacity battery module, thereby causing thermal runaway or fire propagation.

Accordingly, there is a demand for a method of minimizing thermal runaway or fire propagation between battery cells accommodated in one battery module.

WO 2012/133710 A1 describes a power supply comprising a plurality of battery blocks each including a plurality of battery cells, the battery cells having gas discharge holes in surfaces of outer package cans and being stacked in a manner such that the gas discharge holes are placed on the same plane; hollow discharge ducts facing the gas discharge holes of the battery cells to guide gas discharged through the gas discharge holes to the outside; and a connection duct to which the discharge ducts disposed on the battery blocks are connected so as to discharge gas from the discharge ducts to the outside. In the power supply, the discharge ducts are connected to the connection duct through discharge valves, and the discharge valves are opened in directions from the discharge ducts to the connection duct but closed in directions from the connection duct to the discharge ducts.

### DISCLOSURE

### Technical Problem

The present disclosure is designed to solve the problems of the related art, and therefore the present disclosure is directed to providing a battery module in which safety against fire or gas explosion is increased, and a battery pack and vehicle including the battery module.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

The present invention is defined according to the subject matter of the appended independent claims. Particular embodiments are given by the additional features of the appended dependent claims.

In an aspect of the present disclosure, there is provided a battery module including
a plurality of battery cells, and
a module housing including a cell receiver configured to accommodate the plurality of battery cells therein and including an outlet through which gas discharged from the plurality of battery cells is discharged, and a gas venting unit configured to cover a side of the cell receiver and including a gas inlet through which gas discharged from the outlet is introduced, a gas channel including a path through which gas introduced through the gas inlet moves, and a gas outlet communicating with the gas channel.

The plurality of battery cells are stacked in one direction to form at least two battery cell groups,
wherein the at least two battery cell groups are spaced apart from each other, and
each of the at least two battery cell groups is configured to, when gas is discharged from a battery cell, discharge the gas into a space between the at least two battery cell groups,
wherein the outlet is located to face the space between the at least two battery cell groups, and
the gas inlet is located to communicate with the outlet.

The gas channel may extend in a direction facing the space between the at least two battery cell groups, and
the gas outlet may be formed at an end portion of the gas venting unit in the direction facing the space between the at least two battery cell groups.

At least two outlets may be formed in the cell receiver, and
at least two gas channels may be provided in the gas venting unit,
wherein the at least two gas channels respectively communicate with the at least two outlets, and the at least two gas channels are configured so that movement directions of gas are different from each other.

The battery module further includes a reinforcing beam mounted in an inner space of the cell receiver, located between the at least two battery cell groups, and including a partition wall portion configured to guide gas discharged from the plurality of battery cells to move to the outlet and divide the space between at least two battery cell groups.

The reinforcing beam further includes a communication hole through which air is movable to the at least two battery cell groups, and an opening/closing member configured to, when gas is discharged from the plurality of battery cells, seal the communication hole.

The reinforcing beam may further include a gas guide portion protruding from the partition wall portion to guide the gas to move to the gas inlet.

The cell receiver and the gas venting unit are integrally formed with each other.

The gas channel may include a plurality of protrusions that are spaced part from each other at a certain interval to interfere with gas moving in the gas channel.

In another aspect of the present disclosure, there is provided a battery pack including at least one battery module.

In another aspect of the present disclosure, there is provided a vehicle including at least one battery module.

### Advantageous Effects

According to an aspect of the present disclosure, because gas discharged from a plurality of battery cells accommodated therein may be moved to a position facing an outer circumferential portion of a cell receiver through a gas venting unit, and thus, the gas or high-temperature sparks may be discharged to a position (i.e., an intended position) far from a position of other adjacent battery modules, when a plurality of battery modules are mounted in a battery pack, the movement of high-temperature gas to other adjacent battery modules may be effectively reduced.

Furthermore, according to the present disclosure, because the gas venting unit covers a side of the cell receiver to increase the mechanical rigidity of a module housing, when external impact occurs in the battery module, the plurality of battery cells accommodated in the cell receiver may be safely protected.

Also, according to an aspect of the present disclosure, because at least two gas channels respectively communicate with at least two outlets and the at least two gas channels are configured so that movement directions of gas are different from each other, when high-temperature gas is discharged from any one of at least two battery cell groups, the high-temperature gas may be discharged to the outside through an adjacent outlet from among the at least two outlets, and because the gas channel communicating with the outlet is configured so that a movement direction of gas is different from that of the other gas channel, the temperature rise of the other battery cell group that is normally operating due to high-temperature gas or sparks generated by an abnormal operation of one battery cell group may be effectively prevented.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating a battery module according to an embodiment of the present disclosure.
FIG. 2 is an exploded perspective view schematically illustrating elements of a battery module according to an embodiment of the present disclosure.
FIG. 3 is a partial perspective view schematically illustrating a part of a cell receiver of a module housing of a battery module according to an embodiment of the present disclosure.
FIG. 4 is a bottom view schematically illustrating a gas venting unit of a module housing of a battery module according to an embodiment of the present disclosure.
FIG. 5 is a plan view schematically illustrating a gas venting unit of a module housing of a battery module according to an embodiment of the present disclosure.
FIG. 6 is a partial cut-away perspective view schematically illustrating a gas venting unit, illustrating a portion A of FIG. 2.
FIG. 7 is a perspective view schematically illustrating the inside of a cell receiver of a module housing of a battery module according to an embodiment of the present disclosure.
FIG. 8 is a partial vertical cross-sectional view schematically illustrating the inside of a battery module according to an embodiment of the present disclosure.
FIG. 9 is a partial enlarged view schematically illustrating a portion B of FIG. 8.
FIGS. 10 and 11 are partial vertical cross-sectional views illustrating the inside of a battery module according to another embodiment of the present disclosure.
FIG. 12 is a partial vertical cross-sectional view schematically illustrating the inside of a battery module according to still another embodiment of the present disclosure.
FIG. 13 is a partial vertical cross-sectional view schematically illustrating the inside of a gas channel of a battery module according to still another embodiment of the present disclosure.
FIG. 14 is a perspective view schematically illustrating a battery pack according to an embodiment of the present disclosure.
FIG. 15 is an exploded perspective view schematically illustrating a part of a battery module and a part of a side frame of a battery pack according to an embodiment of the present disclosure.
FIG. 16 is a partial vertical cross-sectional view schematically illustrating the inside of a battery pack according to an embodiment of the present disclosure.
FIG. 17 is a perspective view schematically illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

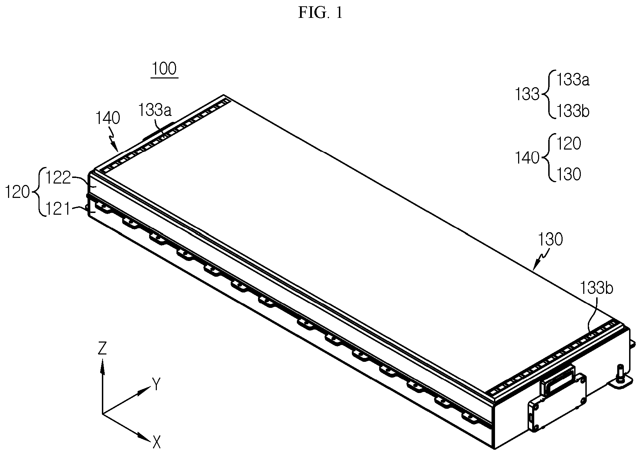

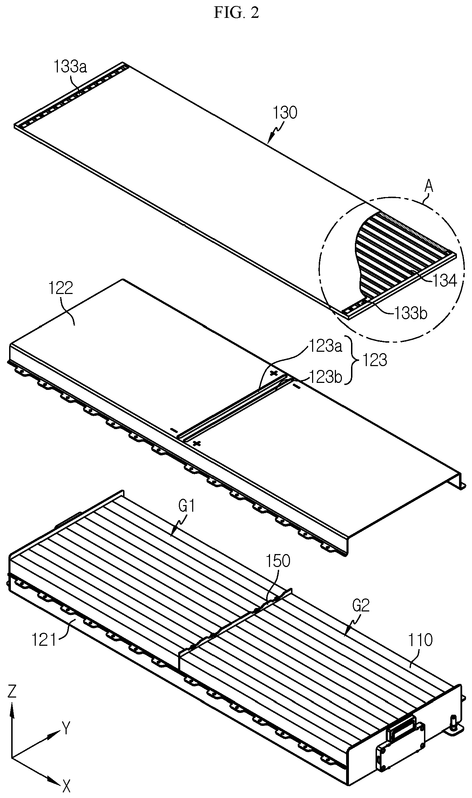

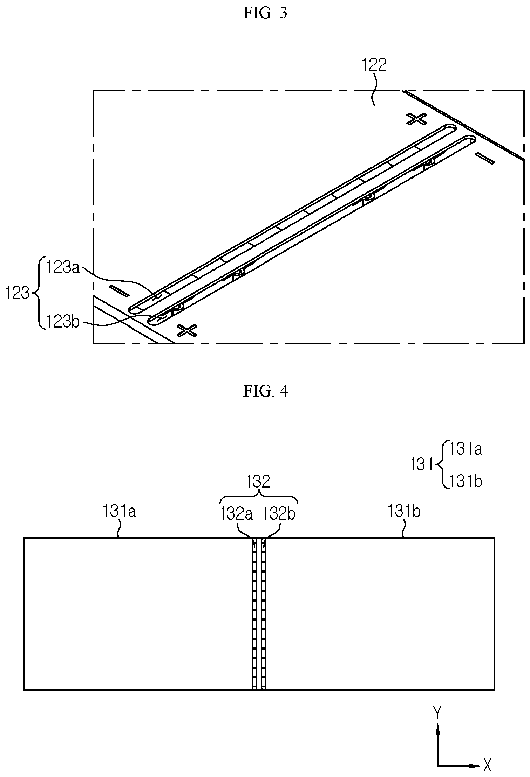

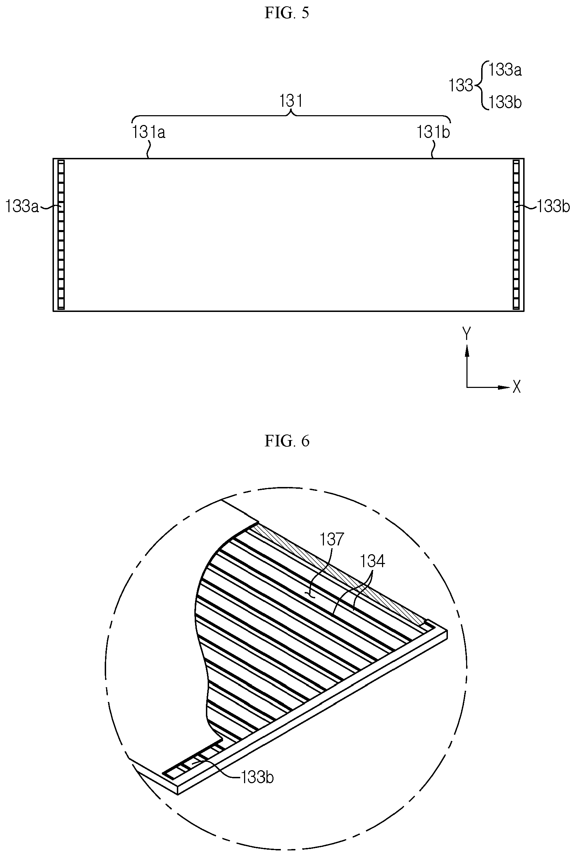

FIG. 1 is a perspective view schematically illustrating a battery module according to an embodiment of the present disclosure. FIG. 2 is an exploded perspective view schematically illustrating elements of a battery module according to an embodiment of the present disclosure. FIG. 3 is a partial perspective view schematically illustrating a part of a cell receiver of a module housing of a battery module according to an embodiment of the present disclosure. FIG. 4 is a bottom view schematically illustrating a gas venting unit of a module housing of a battery module according to an embodiment of the present disclosure. FIG. 5 is a plan view schematically illustrating a gas venting unit of a module housing of a battery module according to an embodiment of the present disclosure. FIG. 6 is a partial cut-away perspective view schematically illustrating a gas venting unit, illustrating a portion A of FIG. 2. In FIG. 1, an X-axis direction is a right direction, a Y-axis direction is a rear direction, and a Z-axis direction is an upward direction.

Referring to FIGS. 1 through 6, a battery module 100 according to an embodiment of the present disclosure includes a plurality of battery cells 110 and a module housing 140.

The battery cells 110 may be, for example, pouch-type battery cells 110 having high energy density and easy stacking. As shown in FIG. 2, the pouch-type battery cells 110 may be erected in a vertical direction (Z-axis direction) and may be stacked in a front-rear direction (Y-axis direction) to form a battery cell group G1. However, unlike the present embodiment, the battery cells 110 of the present disclosure are not limited to pouch-type battery cells, and the battery cells 110 having prismatic shapes or cylindrical shapes may be used.

Also, the module housing 140 that is an element for accommodating the plurality of battery cells 110 may have a sealed structure formed of a material having high mechanical rigidity to protect the plurality of battery cells 110 from external physical and chemical factors.

Furthermore, the module housing 140 may include a cell receiver 120 and a gas venting unit 130. The cell receiver 120 may accommodate the plurality of battery cells 110 therein. For example, the cell receiver 120 may include a lower housing 121 surrounding lower portions of the battery cells 110 and an upper housing 122 surrounding upper portions of the battery cells 110. Each of the upper housing 122 and the lower housing 121 may be provided in a substantially U-shaped plate shape. The upper housing 122 and the lower housing 121 may be coupled to each other by using bolting and/or welding at edge portions.

The cell receiver 120 may include an outlet 123 through which gas or high-temperature sparks discharged from the plurality of battery cells 110 accommodated in the cell receiver 120 are discharged to the outside. For example, as shown in FIGS. 2 and 3, two outlets 123 may be formed in the upper housing 122. The outlet 123 may be formed by longitudinally opening a ceiling portion of the upper housing 122 in the front-rear direction (Y-axis direction). Two outlets, that is, first and second outlets 123a, 123b may be formed in the cell receiver 120.

Also, the gas venting unit 130 may cover a side of the cell receiver 120. That is, as shown in FIG. 2, the gas venting unit 130 may have a plate shape extending in a horizontal direction to cover an upper portion of the cell receiver 120. The gas venting unit 130 may be adhered to a top surface of the cell receiver 120. Alternatively, the cell receiver 120 and the gas venting unit 130 may be integrally formed with each other without being separated from each other. The gas venting unit 130 may have a size substantially corresponding to a top surface of the upper housing 122. The gas venting unit 130 may have a flat quadrangular box shape with an empty inside. It is preferable that the gas venting unit 130 is formed of a fire resistant material so as not to be easily deformed even when high-temperature gas or high-temperature sparks are introduced.

Furthermore, the gas venting unit 130 may include a gas inlet 132, a gas channel 131, and a gas outlet 133. In detail, the gas inlet 132 may be formed by opening a portion of the gas venting unit 130 so that gas discharged to the outlet 123 is introduced. The gas inlet 132 may communicate with the outlet 123 of the cell receiver 120. That is, the gas inlet 132 may be formed at a position facing the outlet 123. For example, as shown in FIG. 4, the gas inlet 132 may be formed on a bottom surface of the gas venting unit 130. The gas inlet 132 may be formed at the center of the gas venting unit 130 in a left-right direction. The gas inlet 132 may have an opening that longitudinally extends in the front-rear direction. The gas venting unit 130 may include a first gas inlet 132a and a second gas inlet 132b.

The gas channel 131 may be a portion including a path through which gas introduced into the gas inlet 132 moves. The gas channel 131 may have a plurality of hollow structures. A length and a width of the gas channel 131 may correspond to a length and a width of a top surface of the upper housing 122. A path 137 having an empty inside to allow gas to flow therein may be formed in the gas channel 131. Also, a plurality of partition plates 134 spaced apart from one another in a width direction and longitudinally extending in a longitudinal direction may be provided in the gas channel 131 to divide an inner space. The gas channel 131 may enable energy to be dispersed while high-temperature gas, sparks, or flames introduced through the gas inlet 132 move through the narrow path 137, thereby lowering heat or reducing the scale of flames.

For example, as shown in FIG. 6, the inside of the gas channel 131 is divided by the partition plates 134 and the narrow path 137 is formed between the partition plates 134. A plurality of narrow paths 137 effective increase a movement speed of gas. Also, the narrow paths 137 may effectively limit the movement of high-temperature sparks or flames. Also, a metal mesh net (not shown) may be located in the narrow path 137 or the gas inlet 132, to additionally limit the movement of high-temperature sparks or flames.

Furthermore, the gas outlet 133 may communicate with the gas channel 131. The gas outlet 133 may be formed at an end of the narrow path of the gas channel 131. The gas outlet 133 may be formed by opening a portion of the gas venting unit 130. That is, the gas outlet 133 may be an opening formed at an end portion of the gas channel 131. The gas outlet 133 may be provided at a position facing an outer circumferential portion of the cell receiver 120. For example, as shown in FIG. 5, the gas venting unit 130 may include a first gas outlet 133a and a second gas outlet 133b. The two gas outlets 133a, 133b may be respectively provided at positions facing a left end portion and a right end portion of the cell receiver 120.

For example, when the plurality of battery modules 100 are arranged in the front-rear direction, the first and second gas outlets 133a, 133b may be located at any one of a left end and a right end of the gas venting unit 130.

Accordingly, according to this configuration of the present disclosure, because gas discharged from the plurality of battery cells 110 accommodated therein may be moved to a position facing the outer circumferential portion of the cell receiver 120 through the gas venting unit 130, and thus, the gas may be discharged to a position (i.e., an intended position) as far away as possible from a position of other adjacent battery modules, when the plurality of battery modules 100 are mounted in a battery pack 1000, the movement of high-temperature gas to other adjacent battery modules 100 may be effectively reduced.

Furthermore, according to the present disclosure, because the gas venting unit 130 covers a side of the cell receiver 120 to increase the mechanical rigidity of the module housing 140, when external impact occurs in the battery module 100, the plurality of battery cells 110 accommodated in the cell receiver 120 may be safely protected from the external impact.

Referring back to FIGS. 2 through 5, in the battery module 100 of the present disclosure, the plurality of battery cells 110 may be stacked in one direction (front-rear direction) to form the battery cell group G1. The plurality of battery cells 110 may be arranged to form at least two battery cell groups G1, G2. For example, as shown in FIG. 2, the battery module 100 of the present disclosure may include the battery cell groups G1, G2 arranged side by side in the left-right direction.

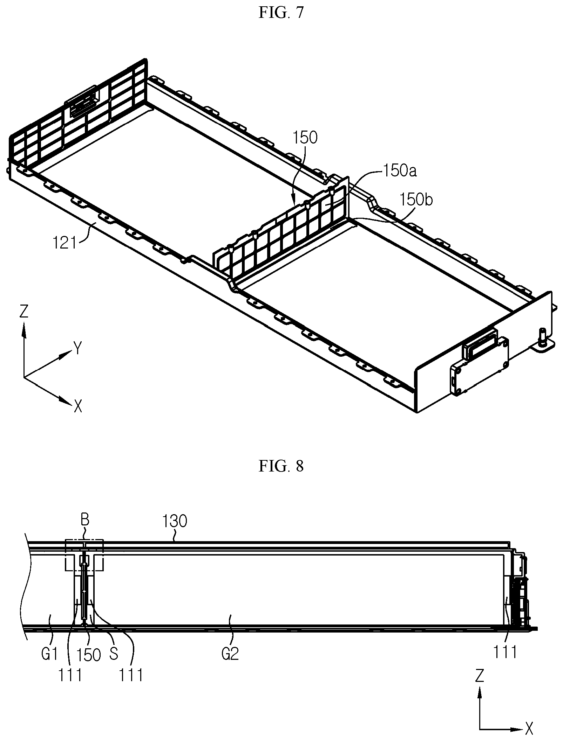

Also, the at least two battery cell groups G1, G2 may be spaced apart from each other. For example, as shown in FIG. 2, the two battery cell groups G1, G2 may be spaced apart from each other by a certain distance in the left-right direction. For example, in the battery cell group G1, electrode leads 111 (see FIG. 8) of each of the plurality of battery cells 110 may be provided at a left end portion and a right end portion. Also, in the battery cell group G1, assuming that the electrode leads are formed at the left end portion and the right end portion, when gas is discharged to the outside of the battery cells 110, gas may be more likely to be discharged from left and right sides than front and rear sides.

Alternatively, in the battery cell groups G1, G2, when gas is ejected from some battery cells 110, the gas may be likely to move to a position where the electrode leads are located. That is, in the battery cell groups G1, G2, because the plurality of battery cells 110 are stacked to face each other in a portion where the electrode leads 111 are not formed, gas may be likely to move to a side or the other side of the battery cell group G1 where the plurality of battery cells are not densely located.

Although not shown, the battery cell groups may be electrically connected by a bus bar including an electrically conductive metal. The bus bar may have a metal bar shape or a metal plate shape. The bus bar may be a known general connection member configured to electrically connect a plurality of battery cells. Accordingly, this will not be described in detail.

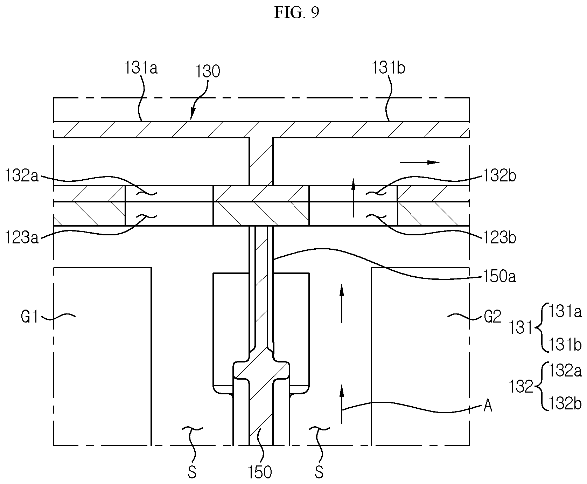

Furthermore, the outlet 123 may face a space S (see FIG. 9) between the at least two battery cell groups G1, G2. That is, the outlet 123 may be formed adjacent to a position where gas discharge of the battery cell group G1 is relatively high. For example, the battery cell group G1 may be configured to, when swelling or thermal runaway occurs, discharge gas into the space between the at least two battery cell groups G1, G2. For example, when the battery cell group G1 includes the pouch-type battery cells 110, gas may be discharged into the space between the at least two battery cell groups G1, G2. For example, when the battery cell 110 is the pouch-type battery cell 110, a sealing portion of the battery cell 110 facing the space between the battery cell groups G1, G2 may have a weaker sealing force than that of other portions.

The gas inlet 132 may be located to communicate with the outlet 123. That is, the gas inlet 132 may face the space between the at least two battery cell groups G1, G2, to minimize the movement of gas discharged from a side of the battery cell group G1.

Accordingly, according to this configuration of the present disclosure, because gas is discharged into the space between the battery cell groups G1, G2, the outlet 123 faces the space between the at least two battery cell groups G1, G2, and the gas inlet 132 communicates with the outlet 123, gas discharged from the battery cell group G1 may be discharged to the outside of the cell receiver 120 through the adjacent outlet 123. Accordingly, in the battery module 100 of the present disclosure, even when gas from some of the plurality of battery cells 110 is discharged into the space between the battery cell groups G1, G2, because the gas may be discharged to the outside of the cell receiver 120 through a shortest distance through the outlet 123 formed at a position facing the space between the battery cell groups G1, G2, the occurrence of thermal runaway or chain explosion of other battery cells 110 that are normally operating due to the movement of high-temperature gas to the other battery cells 110 may be reduced.

Referring back to FIGS. 2 through 5, the gas channel 131 of the gas venting unit 130 provided in the battery module 100 of the present disclosure may extend in a direction facing the space S (see FIG. 8) between the at least two battery cell groups G1, G2. For example, as shown in FIG. 4, the gas venting unit 130 may include a first gas channel 131a and a second gas channel 131b. The gas channels 131a, 131b may respectively extend in left and right directions with respect to the center of the gas venting unit 130. For example, the first gas channel 131a formed on the left of the center of the gas venting unit 130 may communicate with the first gas inlet 132a formed on the left. In the first gas channel 131a formed on the left, the narrow path 137 through which the gas moves may extend in the left direction with respect to the center of the gas venting unit 130. Also, the second gas channel 131b formed on the right may communicate with the second gas inlet 132b formed on the right. In the second gas channel 131b formed on the right, the narrow path 137 through which the gas moves may extend in the right direction with respect to the center of the gas venting unit 130.

Also, the gas outlet 133 may be formed at an end portion of the gas venting unit 130 in a direction facing the space between the battery cell groups G1, G2. Also, the gas outlet 133 may be located on an outer circumferential portion of the gas venting unit 130. The gas outlet 133 may be formed on a side of the outer circumferential portion of the gas venting unit 130 not facing other battery modules 100. For example, as shown in FIG. 5, the gas outlet 133 may be formed by opening a portion of a top surface of the gas venting unit 130. However, the present disclosure is not limited thereto, and the gas outlet 133 may be formed by opening a part of a left surface of the left end of the gas venting unit 130 or a right surface of the right end of the gas venting unit 130.

Accordingly, according to this configuration of the present disclosure, because the gas channel 131 extends in a direction facing the space between the at least two battery cell groups G1, G2 and the gas outlet 133 is formed at an end portion of the gas venting unit 130 in a direction facing the space between the battery cell groups G1, G2, the occurrence of secondary thermal runaway or secondary gas explosion due to the temperature rise of the module housing 140 caused by the gas discharged to the outside of the module housing 140 through the gas outlet 133 may be prevented.

Referring back to FIGS. 2 and 3, at least two outlets 123 may be formed. For example, as shown in FIG. 3, the first outlet 123a and the second outlet 123b formed side by side in the left-right direction may be formed in the upper housing 122. The first outlet 123a and the second outlet 123b may be spaced apart from each other by a certain distance in the left-right direction.

Also, referring back to FIG. 4, the gas venting unit 130 may include at least two gas channels 131. The at least two gas channels, for example, the first and second gas channels 131a, 131b may respectively communicate with the at least two outlets, for example, the first and second outlets 123a, 123b of the cell receiver 120. The first and second gas channels 131a, 131b may be configured so that movement directions of gas are different from each other. For example, in the first gas channel 131a located on the left of the center of the gas venting unit 130, a movement direction of gas may be the left direction in which the first battery cell group G1 is located. In the second gas channel 131b located on the right of the center of the gas venting unit 130, a movement direction of gas may be the right direction.

Accordingly, according to this configuration of the present disclosure, because at least two gas channels 131 respectively communicate with at least two outlets 123 and the at least two gas channels 131 are configured so that movement directions of gas are different from each other, when high-temperature gas is discharged from any one of the at least two battery cell groups G1, G2, the gas may be discharged to the outside through the adjacent outlet 123 from among the at least two outlets 123, and because the gas channel 131 communicating with the outlet 123 is configured so that a movement direction of gas is different from that of the other gas channel 131, the temperature rise of the other battery cell group G1 that is normally operating due to high-temperature gas generated by an abnormal operation of one battery cell group G2 may be effectively prevented.

FIG. 7 is a perspective view schematically illustrating the inside of a cell receiver of a module housing of a battery module according to an embodiment of the present disclosure. FIG. 8 is a partial vertical cross-sectional view schematically illustrating the inside of a battery module according to an embodiment of the present disclosure. FIG. 9 is a partial enlarged view schematically illustrating a portion B of FIG. 8.

Referring to FIGS. 7 through 9, the battery module 100 according to an embodiment of the present disclosure may further include a reinforcing beam 150. The reinforcing beam 150 may be mounted in an inner space of the cell receiver 120. The reinforcing beam 150 may be located between the at least two battery cell groups G1, G2. For example, as shown in FIG. 7, the reinforcing beam 150 may be located at the center in the inner space of the cell receiver 120. The reinforcing beam 150 may be located in a space between the battery cell groups G1, G2 that are located in the left-right direction.

Also, the reinforcing beam 150 may be configured to guide the movement of gas discharged from the plurality of battery cells 110 to the outlet 123. The reinforcing beam 150 may include a partition wall portion 150a configured to guide the movement of gas discharged from the plurality of battery cells 110 to the outlet 123 and divide the space between the at least two battery cell groups G1, G2. For example, as shown in FIG. 7, the reinforcing beam 150 may include a coupling portion 150b coupled to the lower housing 121 and the partition wall portion 150a protruding from the coupling portion 150b upward to the outlet 123. The partition wall portion 150a may divide a receiving space in which the at least two battery cell groups G1, G2 are mounted into two spaces. The partition wall portion 150a may be configured to prevent the movement of high-temperature gas discharged from any one (e.g., G2) from among the at least two battery cell groups G1, G2 to the other battery cell group (e.g., G1).

Accordingly, according to this configuration of the present disclosure, because the reinforcing beam 150 including the partition wall portion 150a configured to guide the movement of gas discharged from the plurality of battery cells 110 to the outlet 123 and divide the space between the at least two battery cell groups G1, G2 is further included, high-temperature gas generated in the at least two battery cell groups G1, G2 may be guided to move to the outlet 123. Furthermore, due to the partition wall portion 150a of the reinforcing beam 150, because the movement of high-temperature gas A discharged from any one (e.g., G2) from among the at least two battery cell groups G1, G2 to the other battery cell group (e.g., G1) may be prevented, thermal runaway or gas explosion propagated to the other battery cell group (e.g., G1) may be prevented.

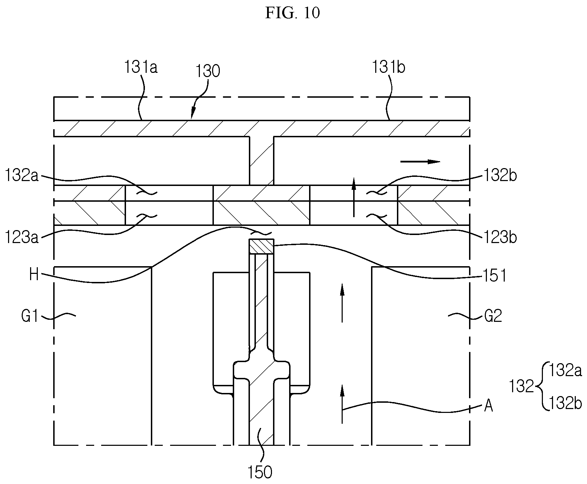

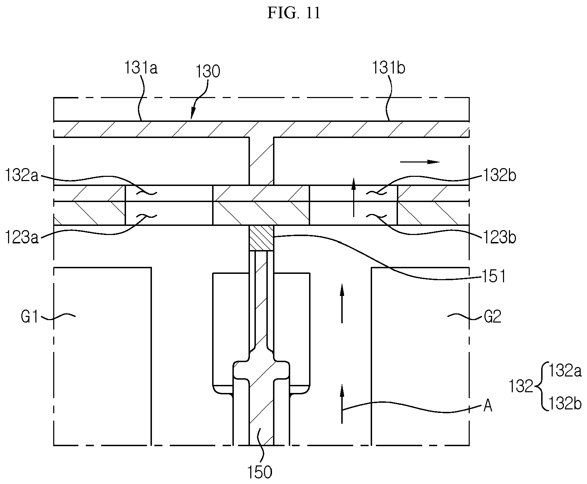

FIGS. 10 and 11 are partial vertical cross-sectional views schematically illustrating the inside of a battery module according to another embodiment of the present disclosure.

Referring back to FIGS. 10 and 11, when compared to the reinforcing beam 150 of FIG. 9, the reinforcing beam 150 of the battery module 100 according to another embodiment of the present disclosure may include a communication hole H through which air is movable. Other elements may be the same as those of the battery module 100 of FIG. 9.

In detail, the reinforcing beam 150 of FIG. 10 may include the communication hole H through which air is movable to the at least two battery cell groups G1, G2. The communication hole H may be formed by opening a portion of the reinforcing beam 150. Alternatively, as shown in FIG. 10, the communication hole H may have a groove shape formed by recessing an upper end of the reinforcing beam 150 downward.

Also, as shown in FIG. 11, the reinforcing beam 150 may further include an opening/closing member 151 configured to, when gas is discharged from the plurality of battery cells 110, seal the communication hole H. The opening/closing member 151 may be formed of a thermal expansion material whose volume expands when a temperature rises to a certain temperature or higher. The thermal expansion material of the opening/closing member 151 may be a material of, for example an FS1000 product manufactured by Saint-Gobain. Alternatively, the thermal expansion material may include graphite flakes whose volume expands at a certain temperature. The opening/closing member 151 may be provided in the communication hole H. The opening/closing member 151 may be configured to, when high-temperature gas is discharged from the battery cells 110, increase a temperature of the thermal expansion material and seal the communication hole H.

Accordingly, according to this configuration of the present disclosure, because the reinforcing beam 150 includes the communication hole H through which air is movable to the at least two battery cell groups G1, G2, and further includes the opening/closing member 151 configured to, when gas is discharged from the plurality of battery cells 110, seal the communication hole H, air may smoothly move between the at least two battery cell groups G1, G2 during a normal operation of the battery module 100, thereby facilitating thermal equilibrium between the at least two battery cell groups G1, G2. When gas explosion occurs in any one of the at least two battery cell groups G1, G2, because the communication hole H formed in the reinforcing beam 150 may be sealed by the opening/closing member 151, the introduction of high-temperature gas into the other battery cell group G1 that normally operates may be prevented. Accordingly, according to the present disclosure, because secondary gas explosion of the other battery cell group G1 due to gas explosion of some battery cells 110 may be prevented, thereby minimizing damage.

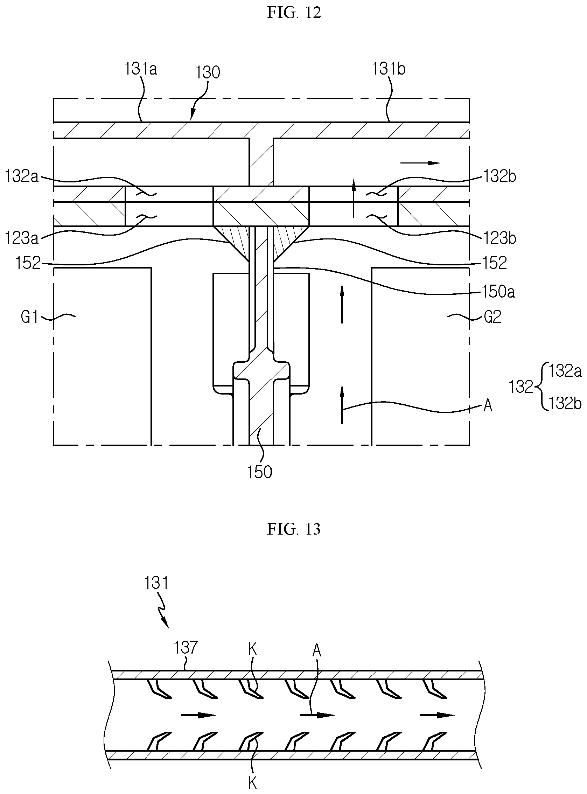

FIG. 12 is a partial vertical cross-sectional view illustrating the inside of a battery module according to still another embodiment of the present disclosure.

Referring to FIG. 12, in the battery module 100 according to another embodiment, the reinforcing beam 150 may further include a gas guide portion 152, unlike the reinforcing beam 150 of the battery module 100 of FIG. 9. However, other elements may be the same as those of the battery module 100 of FIG. 9.

In detail, the reinforcing beam 150 of FIG. 12 may include the gas guide portion 152 configured to guide the gas A to move to the gas inlet 132. The gas guide portion 152 may protrude from the partition wall portion 150a. For example, as shown in FIG. 12, the reinforcing beam 150 may include the gas guide portion 152 on each of both side surfaces of the partition wall portion 150a. The gas guide portion 152 may have an inclined surface to guide the movement of the gas A to the outlet 123. The inclined surface may extend from the partition wall portion 150a to the outlet 123. However, the present disclosure is not limited thereto, and although not shown, for example, the gas guide portion 152 may have a curved surface extending from the partition wall portion 150a to the outlet 123.

Accordingly, according to this configuration of the present disclosure, because the reinforcing beam 150 includes the gas guide portion 152 protruding from the partition wall portion 150a to guide the gas A to move to the gas inlet 132, and thus, high-temperature gas discharged from the battery cells 110 may move to the outlet 123 without being stagnant, the temperature rise of other battery cells 110 in the vicinity due to the high-temperature gas may be minimized. Accordingly, greater damage to the battery module 100 may be prevented.

FIG. 13 is a partial vertical cross-sectional view schematically illustrating the inside of a gas channel of a battery module according to still another embodiment of the present disclosure.

Referring to FIG. 13 together with FIGS. 6 and 9, a plurality of protrusions K configured to interfere with high-temperature gas, sparks, and flames may be formed in the gas channel 131 to be spaced apart from each other at a certain interval. The plurality of protrusions K may protrude inward from an inner surface of the narrow path 137. Also, the plurality of protrusions K may be inclined in a movement direction of the gas A. That is, the plurality of protrusions K may reduce a movement speed of the gas A while allowing the gas A to move in an intended movement direction. In addition, the plurality of protrusions K may prevent the gas from moving in a reverse direction (direction opposite to the intended direction) back into the cell receiver 120.

Accordingly, according to this configuration of the present disclosure, in the battery module 100 of the present disclosure, because the plurality of protrusions K configured to interfere with the gas A moving into the gas channel 131 of the gas venting unit 130 are formed to be spaced apart from each other at certain intervals, a movement speed and gas pressure of the gas A moving through the gas channel 131 may be effectively reduced. Furthermore, because the plurality of protrusions K may suppress the movement of the gas from moving in the reverse direction (backward flow), not the intended movement direction of the gas of the gas channel 131, the gas moving through the gas channel 131 may be prevented from being introduced back into the module housing. Accordingly, the battery module 100 of the present disclosure may prevent the temperature rise of the plurality of battery cells 110 due to the backward flow of high-temperature gas into the module housing.

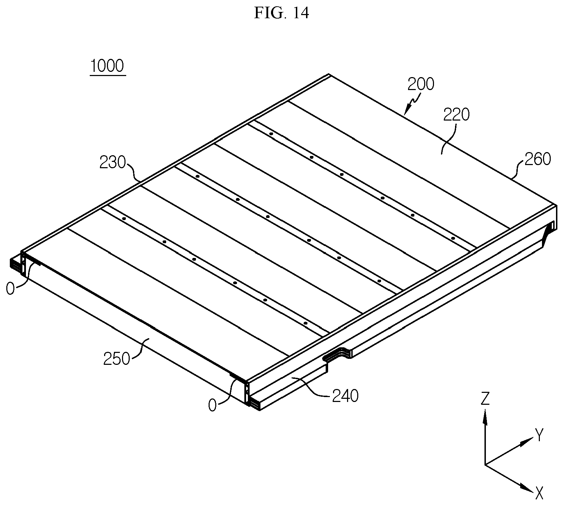

FIG. 14 is a perspective view schematically illustrating a battery pack according to another embodiment of the present disclosure.

Referring to FIG. 14 together with FIG. 1, the battery pack 1000 according to another embodiment of the present disclosure may include at least one battery module 100 and a pack case 200 in which a plurality of battery modules 100 are accommodated. The pack case 200 for accommodating the battery modules 100 may include a left side frame 230, a right side frame 240, a base plate 210 coupled to a lower portion of each of the left side frame 230 and the right side frame 240, a top plate 220 coupled to an upper portion of each of the left side frame 230 and the right side frame 240, a front cover 250 forming an entire front wall of the pack case 200, and a rear cover 260 forming a rear wall.

Also, although not shown in FIG. 14, a plurality of battery modules 100 may be arranged in the front-rear direction. Also, a discharge port O communicating with the gas outlet 133 of the gas venting unit 130 of the battery module 100 may be formed in a front portion of the battery pack 1000. For example, the gas venting unit 130 may communicate with a gas discharge passage (not shown) provided in each of the left side frame 230 and the right side frame 240. An end of the gas discharge passage may be connected to the discharge port O. For example, the gas discharge passage may be a gas passage longitudinally extending in an extending direction of the left side frame 230.

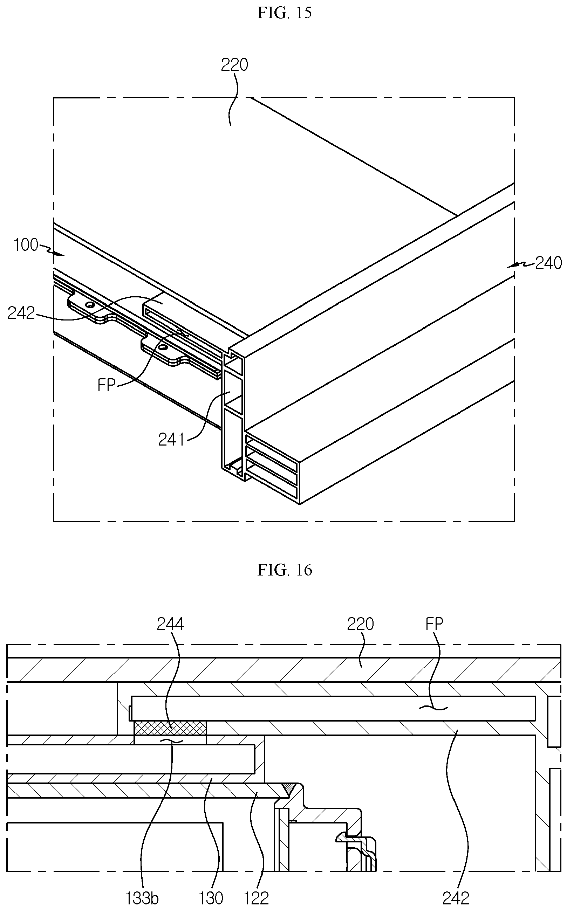

FIG. 15 is an exploded perspective view schematically illustrating a part of a battery module and a part of a side frame of a battery pack according to an embodiment of the present disclosure. FIG. 16 is a partial vertical cross-sectional view schematically illustrating the inside of a battery pack according to an embodiment of the present disclosure.

Referring to FIGS. 15 and 16, the right side frame 240 may include a vertical frame portion 241 extending in a height direction of the battery module 100, and a module connection frame portion 242 extending from the vertical frame portion 241 in the horizontal direction (left direction) and connected to the gas venting unit 130. The module connection frame portion 242 is formed in a hollow structure and includes a gas movement path FP therein.

Also, the module connection frame portion 242 includes a plurality of suction ports 244 formed at certain intervals in a longitudinal direction (Y-axis direction), and one discharge port O at an end portion close to the front cover 250. Each suction port 244 may be located to face the gas outlet 133 of the gas venting unit 130 of each battery module 100. A gasket may be applied to a contact interface between each suction port 244 and the gas out let 133 to ensure sealing and prevent pushing. Also, a metal mesh net may be applied to each suction port 244 to prevent high-temperature sparks or flames from leaking to the outside.

Referring to FIGS. 15 and 16, the module connection frame portion 242 of the right side frame 240 of the present embodiment is located over the gas venting unit 130. In other words, an end portion of the module connection frame portion 242 may be located on a right edge of a top surface of the gas channel 131 and the suction port 244 may be vertically matched to the second gas outlet 133b, thereby communicating with the gas venting unit 130.

That is, gas generated in the battery cell group G2 may be introduced into the gas venting unit 130 through the second outlet 123b, may horizontally move in the right direction along the gas channel 131, may rise at the second gas outlet 133b, and may be introduced into the right side frame 240. The moved gas may move toward the front cover 250 of the pack case 200 along the gas movement path FP of the right side frame 240, and may be discharged to the outside of the pack case 200 through the discharge port O of the module connection frame portion 242.

Accordingly, according to the present disclosure, in the case of high-temperature sparks or flames generated in the battery cell group G2, a movement direction of the sparks or flames may be switched due to a vertical connection structure of the second outlet 123b and the second gas inlet 132b, the sparks or flames may be dispersed due to multiple narrow path structures in the gas channel 131, and a movement direction of the sparks or flames may be switched again due to a vertical connection structure between the second gas outlet 133b and the suction port 244. Accordingly, because high-temperature sparks or flames may be lost while being switched and dispersed several times, the sparks and flames may be prevented from being discharged to the outside of the pack case 200. Ultimately, the battery pack 1000 of the present disclosure may significantly reduce the risk of fire around the battery pack 1000.

Also, although not shown, the left side frame 230 may include a suction port communicating with the first gas outlet 133a of the gas venting unit 130, like the right side frame. The left side frame 230 may include a vertical frame portion extending in the height direction of the battery module 100, and a module connection frame portion extending from the vertical frame portion in the horizontal direction (right direction) and connected to the gas venting unit 130. The module connection frame portion is formed in a hollow structure and includes a gas movement path therein. Also, the module connection frame portion 242 includes one discharge port O at an end portion close to the front cover 250. The suction port of the left side frame 230 may be located to face the gas outlet 133 of the gas venting unit 130 of each battery module 100.

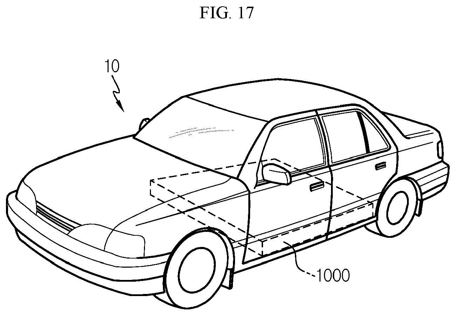

FIG. 17 is a perspective view schematically illustrating a vehicle according to an embodiment of the present disclosure.

Referring to FIG. 17 together with FIG. 1, a vehicle 10 according to an embodiment of the present disclosure may include at least one battery module (not shown). The vehicle may include a vehicle body having a receiving space in which the battery pack 1000 including at least one battery module is accommodated. For example, the vehicle may be an electric vehicle, an electric scooter, an electric wheelchair, or an electric bike.

It will be understood by one of ordinary skill in the art that when terms indicating directions such as upper, lower, left, right, front, and rear are used, these terms are only for convenience of explanation and may vary according to a position of a target object, a position of an observer, etc. connection frame portion 242 extending from the vertical frame portion 241 in the horizontal direction (left direction) and connected to the gas venting unit 130. The module connection frame portion 242 is formed in a hollow structure and includes a gas movement path FP therein.

Also, the module connection frame portion 242 includes a plurality of suction ports 244 formed at certain intervals in a longitudinal direction (Y-axis direction), and one discharge port O at an end portion close to the front cover 250. Each suction port 244 may be located to face the gas outlet 133 of the gas venting unit 130 of each battery module 100. A gasket may be applied to a contact interface between each suction port 244 and the gas out let 133 to ensure sealing and prevent pushing. Also, a metal mesh net may be applied to each suction port 244 to prevent high-temperature sparks or flames from leaking to the outside.

Referring to FIGS. 15 and 16, the module connection frame portion 242 of the right side frame 240 of the present embodiment is located over the gas venting unit 130. In other words, an end portion of the module connection frame portion 242 may be located on a right edge of a top surface of the gas channel 131 and the suction port 244 may be vertically matched to the second gas outlet 133b, thereby communicating with the gas venting unit 130.

That is, gas generated in the battery cell group G2 may be introduced into the gas venting unit 130 through the second outlet 123b, may horizontally move in the right direction along the gas channel 131, may rise at the second gas outlet 133b, and may be introduced into the right side frame 240. The moved gas may move toward the front cover 250 of the pack case 200 along the gas movement path FP of the right side frame 240, and may be discharged to the outside of the pack case 200 through the discharge port O of the module 24 connection frame portion 242.

Accordingly, according to the present disclosure, in the case of high-temperature sparks or flames generated in the battery cell group G2, a movement direction of the sparks or flames may be switched due to a vertical connection structure of the second outlet 123b and the second gas inlet 132b, the sparks or flames may be dispersed due to multiple narrow path structures in the gas channel 131, and a movement direction of the sparks or flames may be switched again due to a vertical connection structure between the second gas outlet 133b and the suction port 244. Accordingly, because high-temperature sparks or flames may be lost while being switched and dispersed several times, the sparks and flames may be prevented from being discharged to the outside of the pack case 200. Ultimately, the battery pack 1000 of the present disclosure may significantly reduce the risk of fire around the battery pack 1000.

Also, although not shown, the left side frame 230 may include a suction port communicating with the first gas outlet 133a of the gas venting unit 130, like the right side frame. The left side frame 230 may include a vertical frame portion extending in the height direction of the battery module 100, and a module connection frame portion extending from the vertical frame portion in the horizontal direction (right direction) and connected to the gas venting unit 130. The module connection frame portion is formed in a hollow structure and includes a gas movement path therein. Also, the module connection frame portion 242 includes one discharge port O at an end portion close to the front cover 250. The suction port of the left side frame 230 may be located to face the gas outlet 133 of the gas venting unit 130 of each battery module 100.

FIG. 17 is a perspective view schematically illustrating a vehicle according to an embodiment of the present disclosure.

Referring to FIG. 17 together with FIG. 1, a vehicle 10 according to an embodiment of the present disclosure may include at least one battery module (not shown). The vehicle may include a vehicle body having a receiving space in which the battery pack 1000 including at least one battery module is accommodated. For example, the vehicle may be an electric vehicle, an electric scooter, an electric wheelchair, or an electric bike.

It will be understood by one of ordinary skill in the art that when terms indicating directions such as upper, lower, left, right, front, and rear are used, these terms are only for convenience of explanation and may vary according to a position of a target object, a position of an observer, etc.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

## Claims

1. A battery module (100) comprising:
a plurality of battery cells (110); and
a module housing (140) comprising a cell receiver (120) configured to accommodate the plurality of battery cells (110) therein and comprising an outlet (123) through which gas discharged from the plurality of battery cells (110) is discharged, and a gas venting unit (130) configured to cover a side of the cell receiver (120) and comprising a gas inlet (132) through which gas discharged from the outlet (123) is introduced, a gas channel (131) comprising a path (137) through which gas introduced through the gas inlet (132) moves, and a gas outlet (133) communicating with the gas channel (131),
wherein the plurality of battery cells (110) are stacked in one direction to form at least two battery cell groups (G1; G2),
wherein the at least two battery cell groups (G1; G2) are spaced apart from each other,
a reinforcing beam (150) mounted in an inner space of the cell receiver (120), located between the at least two battery cell groups (G1; G2), and comprising a partition wall portion (150a) configured to guide gas discharged from the plurality of battery cells (110) to move to the outlet (123) and divide the space between at least two battery cell groups (G1; G2),
wherein the reinforcing beam (150) further comprises a communication hole (H) through which air is movable to the at least two battery cell groups (G1; G2), and an opening/closing member (151) configured to, when gas is discharged from the plurality of battery cells (110), seal the communication hole (H)
wherein each of the at least two battery cell groups (G1; G2) is configured to, when gas is discharged from a battery cell, discharge the gas into a space between the at least two battery cell groups (G1; G2),
wherein the outlet (123) is located to face the space between the at least two battery cell groups (G1; G2), and
the gas inlet (132) is located to communicate with the outlet (123).

2. The battery module (100) according to claim 1, wherein the gas channel (131) extends in a direction facing the space between the at least two battery cell groups (G1; G2), and
The gas outlet (133) is formed at an end portion of the gas venting unit (130) in the direction facing the space between the at least two battery cell groups (G1; G2).

3. The battery module (100) according to claim 1, wherein at least two outlets (123a; 123b) are formed in the cell receiver (120), and
at least two gas channels (131a; 131b) are provided in the gas venting unit (130),
wherein the at least two gas channels (131a; 131b) respectively communicate with the at least two outlets (123a; 123b), and the at least two gas channels (131a; 131b) are configured so that movement directions of gas are different from each other.

4. The battery module (100) according to claim 1, wherein the reinforcing beam (150) further comprises a gas guide portion (152) protruding from the partition wall portion (150a) to guide the gas to move to the gas inlet (132).

5. The battery module (100) according to claim 1, wherein the cell receiver (120) and the gas venting unit (130) are integrally formed with each other.

6. The battery module (100) according to claim 1, wherein the gas channel (131) comprises a plurality of protrusions (K) that are spaced apart from each other at a certain interval to interfere with gas moving in the gas channel (131).

7. A battery pack (1000) comprising at least one battery module (100) according to any one of claims 1 through 6.

8. A vehicle (10) comprising at least one battery module (100) according to any one of claims 1 through 6.

## Patentansprüche

1. Batteriemodul (100) aufweisend:
mehrere Batteriezellen (110); und
ein Modulgehäuse (140), das eine Zellenaufnahme (120), die konfiguriert ist, die mehreren Batteriezellen (110) darin aufzunehmen, und einen Auslass (123) aufweist, durch den von den mehreren Batteriezellen (110) abgegebenes Gas abgegeben wird, und eine Gasentlüftungseinheit (130) aufweist, die konfiguriert ist, eine Seite der Zellenaufnahme (120) abzudecken, und einen Gaseinlass (132), durch den von dem Auslass (123) abgegebenes Gas eingeleitet wird, einen Gaskanal (131), der einen Pfad (137) aufweist, durch den durch den Gaseinlass (132) eingeleitetes Gas strömt, und einen Gasauslass (133) aufweist, der mit dem Gaskanal (131) in Verbindung steht,
wobei die mehreren Batteriezellen (110) in einer Richtung aufeinander gestapelt sind und dadurch mindestens zwei Batteriezellengruppen (G1; G2) bilden,
wobei die mindestens zwei Batteriezellengruppen (G1; G2) voneinander beabstandet sind,
einen Verstärkungsträger (150), der in einem Innenraum der Zellenaufnahme (120) angebracht ist, sich zwischen den mindestens zwei Batteriezellengruppen (G1; G2) befindet und einen Trennwandabschnitt (150a) aufweist, der konfiguriert ist, von den mehreren Batteriezellen (110) abgegebenes Gas so zu leiten, dass es zu dem Auslass (123) strömt und den Raum zwischen mindestens zwei Batteriezellengruppen (G1; G2) unterteilt,
wobei der Verstärkungsträger (150) ferner ein Verbindungsloch (H), durch das Luft zu den mindestens zwei Batteriezellengruppen (G1; G2) strömen kann, und ein Öffnungs-/Schließelement (151) aufweist, das konfiguriert ist, wenn Gas von den mehreren Batteriezellen (110) abgegeben wird, das Verbindungsloch (H) dicht zu verschließen,
wobei jede der mindestens zwei Batteriezellengruppen (G1; G2) konfiguriert ist, wenn Gas von einer Batteriezelle abgegeben wird, das Gas in einen Raum zwischen den mindestens zwei Batteriezellengruppen (G1; G2) abzugeben,
wobei der Auslass (123) so angeordnet ist, dass er dem Raum zwischen den mindestens zwei Batteriezellengruppen (G1; G2) zugewandt ist, und
der Gaseinlass (132) so angeordnet ist, dass er mit dem Auslass (123) in Verbindung steht.

2. Batteriemodul (100) nach Anspruch 1, wobei sich der Gaskanal (131) in einer Richtung erstreckt, die dem Raum zwischen den mindestens zwei Batteriezellengruppen (G1; G2) zugewandt ist, und
der Gasauslass (133) an einem Endabschnitt der Gasentlüftungseinheit (130) in der Richtung ausgebildet ist, die dem Raum zwischen den mindestens zwei Batteriezellengruppen (G1; G2) zugewandt ist.

3. Batteriemodul (100) nach Anspruch 1, wobei mindestens zwei Auslässe (123a; 123b) in der Zellenaufnahme (120) ausgebildet sind, und
mindestens zwei Gaskanäle (131a; 131b) in der Gasentlüftungseinheit (130) vorgesehen sind,
wobei die mindestens zwei Gaskanäle (131a; 131b) jeweils mit den mindestens zwei Auslässen (123a; 123b) in Verbindung stehen und die mindestens zwei Gaskanäle (131a; 131b) so konfiguriert sind, dass die Strömungsrichtungen des Gases voneinander verschieden sind.

4. Batteriemodul (100) nach Anspruch 1, wobei der Verstärkungsträger (150) ferner einen Gasführungsabschnitt (152) aufweist, der von dem Trennwandabschnitt (150a) vorsteht, um das Gas so zu leiten, dass es zu dem Gaseinlass (132) strömt.

5. Batteriemodul (100) nach Anspruch 1, wobei die Zellenaufnahme (120) und die Gasentlüftungseinheit (130) einstückig miteinander ausgebildet sind.

6. Batteriemodul (100) nach Anspruch 1, wobei der Gaskanal (131) mehrere Vorsprünge (K) aufweist, die in einem bestimmten Abstand voneinander beabstandet sind, um Gas, das in dem Gaskanal (131) strömt, zu überlagern.

7. Batteriepack (1000), aufweisend mindestens ein Batteriemodul (100) nach einem der Ansprüche 1 bis 6.

8. Fahrzeug (10), aufweisend mindestens ein Batteriemodul (100) nach einem der Ansprüche 1 bis 6.

## Revendications

1. Module de batterie (100) comprenant :
une pluralité de cellules de batterie (110) ; et
un boîtier de module (140) comprenant un récepteur de cellule (120) configuré pour y recevoir la pluralité de cellules de batterie (110) et comprenant une sortie (123) par laquelle le gaz évacué par la pluralité de cellules de batterie (110) est refoulé, et un dispositif de purge de gaz (130) configuré pour couvrir un côté du récepteur de cellule (120), et comprenant une entrée de gaz (132) par laquelle le gaz évacué par la sortie (123) est introduit, un conduit de gaz (131) comprenant un chemin (137) par lequel le gaz introduit à travers l'entrée de gaz (132) se déplace, et une sortie de gaz (133) communiquant avec le conduit de gaz (131),
la pluralité de cellules de batterie (110) étant empilées dans une direction pour former au moins deux groupes de cellules de batterie (G1 ; G2),
les au moins deux groupes de cellules de batterie (G1 ; G2) étant espacés l'un de l'autre,
une traverse de renforcement (150) montée dans un espace intérieur du récepteur de cellule (120), situé entre les au moins deux groupes de cellules de batterie (G1 ; G2), et comprenant une partie de cloison (150a) configurée pour guider le gaz évacué par la pluralité de cellules de batterie (110) afin qu'il se déplace vers la sortie (123) et diviser l'espace entre au moins deux groupes de cellules de batterie (G1 ; G2),
la traverse de renforcement (150) comprenant en outre un orifice de communication (H) par lequel de l'air peut être déplacé vers les au moins deux groupes de cellules de batterie (G1 ; G2), et un élément d'ouverture/fermeture (151) configuré, lors de l'évacuation de gaz par la pluralité de cellules de batterie (110), pour sceller l'orifice de communication (H)
chacun des au moins deux groupes de cellules de batterie (G1 ; G2) étant configuré, lorsqu'un gaz est évacué par une cellule de batterie, pour évacuer le gaz dans un espace entre les au moins deux groupes de cellules de batterie (G1 ; G2),
la sortie (123) étant positionnée de façon à faire face à l'espace entre les au moins deux groupes de cellules de batterie (G1 ; G2), et
l'entrée de gaz (132) étant positionnée de façon à communiquer avec la sortie (123).

2. Module de batterie (100) selon la revendication 1, le conduit de gaz (131) s'étendant dans une direction faisant face à l'espace entre les au moins deux groupes de cellules de batterie (G1 ; G2), et
la sortie de gaz (133) étant formée sur une partie terminale du dispositif de purge de gaz (130) dans la direction faisant face à l'espace entre les au moins deux groupes de cellules de batterie (G1 ; G2).

3. Module de batterie (100) selon la revendication 1, au moins deux sorties (123a ; 123b) étant formées dans le récepteur de cellule (120), et
au moins deux conduits de gaz (131a ; 131b) étant agencés dans le dispositif de purge de gaz (130),
les au moins deux conduits de gaz (131a ; 131b) communiquant respectivement avec les au moins deux sorties (123a ; 123b), et les au moins deux conduits de gaz (131a ; 131b) étant configurés de sorte que les directions de déplacement du gaz sont différentes l'une de l'autre.

4. Module de batterie (100) selon la revendication 1, la traverse de renforcement (150) comprenant en outre une partie de guide de gaz (152) faisant saillie de la partie de cloison (150a) pour guider le gaz pour son déplacement vers l'entrée de gaz (132).

5. Module de batterie (100) selon la revendication 1, le récepteur de cellule (120) et le dispositif de purge de gaz (130) étant formés d'un seul tenant l'un avec l'autre.

6. Module de batterie (100) selon la revendication 1, le conduit de gaz (131) comprenant une pluralité de saillies (K) espacées l'une de l'autre par un certain intervalle afin d'entraver le déplacement du gaz dans le conduit de gaz (131).

7. Bloc-batterie (1000) comprenant au moins un module de batterie (100) selon une quelconque des revendications 1 à 6.

8. Véhicule (10) comprenant au moins un module de batterie (100) selon une quelconque des revendications 1 à 6.
